# EUROPEAN PATENT APPLICATION

(11) **EP 2 947 058 A1**
(43) Date of publication of application: **25.11.2015**
(21) Application number: 14740561.7
(22) Date of filing: 14.01.2014
(51) Int. Cl.: C04B 22/14, C04B 22/06, C04B 24/02, C04B 28/02

(54) **HIGH STRENGTH CEMENT ADMIXTURE AND MANUFACTURING METHOD FOR CONCRETE ARTICLE**

(30) Priority: 15.01.2013 JP 2013004510
(71) Applicant: Denki Kagaku Kogyo Kabushiki Kaisha, Tokyo 103-8338 (JP)
(72) Inventor: SHOJI, Makoto, Itoigawa-shi Niigata 949-0393 (JP); HIGUCHI, Takayuki, Itoigawa-shi Niigata 949-0393 (JP); NGUYEN, Phuong, Itoigawa-shi Niigata 949-0393 (JP); TOMIOKA, Shigeru, Itoigawa-shi Niigata 949-0393 (JP)
(74) Representative: Blodig, Wolfgang
(86) International application number: PCT/JP2014/050473
(87) International publication number: WO 2014/112487

(57) **Abstract**

To provide a high strength cement admixture which allows concrete to achieve steam-curing at an earlier stage because such concrete attains great initial strength development without retardation of setting even with use of a large amount of a high performance water reducing agent, and a process for producing a concrete product.

A high strength cement admixture characterized by comprising a ground mixture of gypsum having a particle size of from 2,500 to 9,000 cm²/g as a Blaine specific surface area and glycerin, and preferably a silica material having a particle size of at least 5,000 cm²/g as a Blaine specific surface area and containing at least 60 mass% of SiO₂, wherein the content of the glycerin is from 0.1 to 10 parts by mass per 100 parts by mass in total of the gypsum and the glycerin, and the content of the silica material is from 45 to 90 parts by mass, per 100 parts by mass in total of the gypsum, the silica material and the glycerin; and a process for producing a concrete product, characterized by blending the above high strength cement admixture, with cement, in an amount of from 2 to 15 parts by mass per 100 parts by mass in total of the cement and the high strength cement admixture.

## Description

### TECHNICAL FIELD

The present invention relates to a high strength cement admixture for concrete products used in the field of civil engineering and construction, and a process for producing a concrete product.

### BACKGROUND ART

Concrete products are typically produced in such a manner that concrete is poured into a steel form, pre-cured and then steam-cured to accelerate strength development, followed by cooling and by unmolding. The pre-curing for the steam-curing, which is influenced by a high performance water reducing agent necessary for producing a high strength concrete product, may retard curing and thereby prolong a time needed for the curing. Therefore, shortening a time for the pre-curing may cause swelling of water at an unhydrated portion in a cement portion and thereby induce cracking in concrete after the steam-curing. Accordingly, a production process has been studied for shortening a time for pre-curing (see Patent Document 1).

Further, as a means for shortening a time for pre-curing, an ultrahigh-early-strength expansive additive containing quick lime, anhydrous gypsum or an alkali metal sulfate as a main component, or a hardening accelerator for a hydraulic composition using a specific compound such as glycerin and an alkali metal sulfate in combination, is known (see Patent Documents 2, 3, 4 and 5), but is insufficient in its performance.

### PRIOR ART DOCUMENTS

### PATENT DOCUMENTS

Patent Document 1: JP-A-2000-301531
Patent Document 2: JP-A-2001-294460
Patent Document 3: JP-A-2011-153068
Patent Document 4: JP-A-2000-233959
Patent Document 5: JP-A-2008-519752

### DISCLOSURE OF INVENTION

### TECHNICAL PROBLEM

In recent years, concrete having a low water content has been increasing as the strength of concrete becomes high. It is essential for such concrete having a low water content to use a large amount of a high performance water reducing agent for securing fluidity. However, using a large amount of a high performance water reducing agent induces drawbacks such as retardation of setting, deterioration in workability and decrease in initial strength development.

Therefore, in production of a concrete product, an admixture which can increase initial strength development, and a process for producing a concrete product, have been desired. Setting time is needed to be adequate for handling, but is preferably shorter so as to shorten a production cycle. Further, the strength is preferably higher.

The present invention has been accomplished to solve such problems, and the object of the present invention is to provide a high strength cement admixture with less deterioration in initial strength development, without retardation of setting, and a process for producing a concrete product.

### SOLUTION TO PROBLEM

The present invention provides the following.
(1) A high strength cement admixture characterized by comprising a ground mixture of gypsum having a particle size of from 2,500 to 9,000 cm²/g as a Blaine specific surface area, and glycerin, wherein the content of the glycerin is from 0.1 to 10 parts by mass per 100 parts by mass in total of the gypsum and the glycerin.
(2) The high strength cement admixture according to the above (1), wherein the ground mixture further contains a silica material having a particle size of at least 5,000 cm²/g as a Blaine specific surface area and containing at least 60 mass% of SiO₂, and wherein the content of the glycerin is from 0.1 to 10 parts by mass and the content of the silica material is from 45 to 90 parts by mass, per 100 parts by mass in total of the gypsum, the silica material and the glycerin.
(3) The high strength cement admixture according to the above (1) or (2), wherein the gypsum is at least one member selected from the group consisting of gypsum dihydrate, gypsum hemihydrate and anhydrous gypsum.
(4) The high strength cement admixture according to the above (2) or (3), wherein the silica material is at least one member selected from the group consisting of silica fume, silica dust, diatomaceous earth, diatomaceous clay and fly ash.
(5) The high strength cement admixture according to any one of the above (1) to (4), wherein the glycerin is attached at the surface of the above ground mixture obtainable by mixing and grinding.
(6) A process for producing a concrete product, characterized by blending the high strength cement admixture as defined in any one of the above (1) to (5), with cement, in an amount of from 2 to 15 parts by mass per 100 parts by mass in total of the cement and the high strength cement admixture.
(7) The process for producing a concrete product according to the above (6), wherein pre-curing and steam-curing are carried out before unmolding the concrete product.
(8) The process for producing a concrete product according to the above (7), wherein the pre-curing is carried out for from 0.5 to 2 hours.
(9) The process for producing a concrete product according to the above (7) or (8), wherein the steam-curing is carried out at a temperature of from 40 to 80°C for from 2 to 8 hours.
(10) A concrete product obtained by the production process as defined in any one of the above (6) to (9).

### ADVANTAGEOUS EFFECTS OF INVENTION

According to the present invention, it is possible to obtain a high strength cement admixture which allows concrete to achieve steam-curing at an earlier stage because such concrete attains great initial strength development without retardation of setting even with use of a large amount of a high performance water reducing agent, than before, a process for producing a concrete product using the same, and a concrete product.

### DESCRIPTION OF EMBODIMENTS

In this specification, "parts" and "%" are based on mass unless otherwise specified.

Further, the term "concrete" in the present invention is a generic term for a cement paste, a cement mortar and a cement concrete.

The gypsum of the present invention may, for example, be gypsum dihydrate, gypsum hemihydrate or anhydrous gypsum, and there are no particularly limitations, but among them, one member or a mixture of two or more of them may be used to enhance strength development.

The gypsum has a particle size of preferably from 2,500 to 9,000 cm²/g, more preferably from 4,000 to 9,000 cm²/g as a Blaine specific surface area.

The glycerin of the present invention is a compound having a chemical formula of C₃H₈O₃ represented as 1,2,3-propanetriol or glycerol in a chemical name. The glycerin is a liquid at normal temperature.

The blend proportion of the glycerin to the gypsum in the high strength cement admixture of the present invention, is such that the content of the glycerin is preferably from 0.1 to 10 parts, more preferably from 1 to 5 parts, per 100 parts by mass in total of the gypsum and the glycerol. If the content of the glycerin is less than 0.1 part, no enhancement of the initial strength may be obtained, and if it exceeds 10 parts, fluidity of concrete may be deteriorated.

The silica material of the present invention is a generic term for a latent-hydraulic material powder containing silica as a main component, and silica fume, silica dust, diatomaceous earth, diatomaceous clay or fly ash may, for example, be mentioned. One or more of them may be used in the present invention.

The silica material of the present invention contains preferably at least 60%, more preferably at least 80% of SiO₂.

The silica material of the present invention has a Blaine specific surface area of preferably at least 5,000 cm²/g, more preferably from 6,000 to 9,000 cm²/g.

The blend portion of the silica material in the high strength cement admixture of the present invention is preferably from 45 to 90 parts, more preferably from 45 to 80 parts, per 100 parts in total of the silica material, the glycerin and the gypsum.

In the high strength cement admixture of the present invention, the glycerin may be attached at the surface of the ground mixture by mixing and grinding the glycerin, the gypsum and preferably further the silica material, such being preferred from the viewpoint of strength development.

In the present invention, the method of mixing and grinding the gypsum, the glycerin and the silica material is not particularly limited, but e.g. a ball mill, a cylinder mill, a vertical mill, a tower mill, an air mill, a centrifugal roller mill or a cone mill may be used. Among them, a ball mill is particularly effective for the mixing and grinding, and more contributes to the strength development.

The amount of the high strength cement admixture of the present invention to be used varies depending upon formulation of concrete, but it is usually preferably from 2 to 15 parts, more preferably from 5 to 12 parts, per 100 parts by mass in total of the cement and the high strength cement admixture. If it is outside the range of the above amount to be used, the enhancement effect of the compressive strength may be small.

In a case where the high strength cement admixture of the present invention is used, as an example of curing conditions from pouring through unmolding of concrete, the pre-curing time from pouring until before steam-curing of the concrete is preferably from 0.5 to 2 hours, particularly preferably about one hour.

The heating rate of the steam-curing is preferably from 40 to 80°C/hour, particularly preferably about 60°C/hour.

The pre-curing of the present invention is preferably sealed curing under room temperature condition.

Further, the maximum temperature of the steam-curing is preferably from 40 to 80°C, more preferably from 60 to 80°C. If it is less than 40°C, no enhancement of the strength can be expected. If it exceeds 80°C, concrete may have cracks. The steam-curing time is preferably from 2 to 8 hours, more preferably from 4 to 8 hours. If it is less than 2 hours, enhancement of the strength is small. On the other hand, if it exceeds 8 hours, not much enhancement of the strength is desired.

The steam-curing of the present invention is preferably carried out by controlling a temperature in a constant humidity chamber having a humidity of 100%.

The cement used in the present invention may, for example, be various Portland cements such as ordinary, high-early-strength, ultrahigh-early-strength, low heat and moderate-heat; various blended cements having blast-furnace slug, fly ash or silica blended in such Portland cements; or filler cement having a limestone powder blended therein.

Among the blended cements, it is preferred to use a blast furnace cement type B from the viewpoint of a smaller burden on the development and a larger strength enhancement effect in the case of using the high strength cement admixture of the present invention.

In the present invention, in addition to sand or gravel, a water reducing agent, a high performance water reducing agent, an AE water reducing agent, a high performance AE water reducing agent, a fluidizer, a defoaming agent, a thickener, a rust-preventive agent, an antifreezer, a shrinkage-reducing agent, a polymer emulsion, a setting modifier or a steel fiber may, for example, be used in combination.

An organic material is used for improving the flexural strength of concrete using the cement admixture of the present invention, and the organic material may, for example, be a fibrous substance such as vinylon fibers, acrylic fibers or carbon fibers. Among them, vinylon fibers or acrylic fibers are preferred.

### EXAMPLES

Now, the present invention will be described in further detail with reference to Examples, but it should be understood that the present invention is by no means restricted thereto.

### Example 1

Using the materials as described below, gypsum and glycerin were blended as shown in Table 1 to prepare a raw material which was then mixed and ground by a ball mill to produce a high strength cement admixture (a Blain specific surface area of each ground mixture was adjusted to about 7,000 cm²/g).

Then, concrete having basic formulation of a unit quantity of water being 138 kg/m³, a unit quantity of cement being 450 kg/m³, a unit quantity of a high strength cement admixture being 45 kg/m³, a water reducing agent being 5.0 kg/m³, a sand-coarse aggregate ratio (s/a) being 40.0% and a quantity of air being 2%, was blended by using a forced biaxial mixer. Cement (B) was used only in Experiments No. 1-22 and No. 1-23, and cement (A) was used in the other Experiments.

Then, the initial setting time of the concrete was measured under environment at 20°C by changing the type of the high strength ceme nt admixture as shown in Table 1.

Thereafter, the concrete was charged into a frame (diameter 10 cm x height 20 cm) to carry out pre-curing at 20°C for one hour, a nd then heated up to 75°C over a period of one hour to carry out steam-curing at a maximum temperature of 75°C for 3 hours by using a steam-curing chamber. Thereafter, the concrete was cooled to 20°C, and then unmolded after 2 hours. Then, the compressive strength was measured after the curing in water at 20°C for 7 days. Table 1 sh ows the results of Example 1.

Further, studies were also conducted in a case where a high strength cement admixture was replaced with an aggregate so as not to incorporate the high strength cement admixture (Experiments No. 1-1 and 1-22).

### (Material used)

Gypsum a: Natural anhydrous gypsum, Blain specific surface area: 5,000 cm²/g, commercial product
Gypsum b: Natural anhydrous gypsum, Blain specific surface area: 2,500 cm²/g, commercial product
Gypsum c: Gypsum dihydrate by-product, Blain specific surface area: 6,000 cm²/g, commercial product
Gypsum d: Gypsum dihydrate by-product, Blain specific surface area: 4,000 cm²/g, commercial product
Cement (A): Ordinary Portland cement, commercial product, density: 3.16 g/cm³
Cement (B): Blast furnace type B, commercial product, density: 3.04 g/cm³
Glycerin: Commercial product, refined glycerin (liquid)
Water reducing agent: Polycarboxylic acid type "Super 300CF", manufactured by W.R. Grace and Co.,
Fine aggregate: From Himekawa, sand containing particles having a particle size of at most 5 mm in a proportion of at least 85%
Coarse aggregate: From Himekawa, gravel containing particles having a particle size of at most 25 mm in a proportion of 100% and containing particles having a particle size of at least 5 mm in a proportion of at least 85%

Further, the above fine aggregate and coarse aggregate were used in the production of all the concretes.

### (Test methods)

Test for setting time: An initial setting time was measured by using a penetration resistance tester manufactured by TESCO Co., Ltd., in accordance with JIS A1147.

Compressive strength: Compressive strength was measured by using a 3,000 kN pressure resistance testing apparatus, model: MIE-735-1-50-1, manufactured by MARUI&Co., LTD., in accordance with JIS A1108.

**TABLE 1**

| Experiment No. | Cement admixture (part) | | | Initial setting time (hrs:min) | Compressive strength (N/mm²) | Notes |
|---|---|---|---|---|---|---|
| | Anhydrous gypsum | Gypsum dihydrate | Glycerin | | | |
| 1-1 | 0 | 0 | 0 | 4:12 | 70.0 | Comp. Ex. |
| 1-2 | a100 | 0 | 0 | 4:35 | 88.0 | Comp. Ex. |
| 1-3 | a99.9 | 0 | 0.1 | 4:00 | 89.0 | Ex. |
| 1-4 | a99 | 0 | 1 | 3:33 | 91.0 | Ex. |
| 1-5 | a98 | 0 | 2 | 3:00 | 94.0 | Ex. |
| 1-6 | a97 | 0 | 3 | 2:34 | 99.0 | Ex. |
| 1-7 | a95 | 0 | 5 | 2:11 | 105.0 | Ex. |
| 1-8 | a92 | 0 | 8 | 2:58 | 94.5 | Ex. |
| 1-9 | a90 | 0 | 10 | 5:38 | 90.0 | Ex. |
| 1-10 | 0 | c100 | 0 | 4:45 | 87.0 | Comp. Ex. |
| 1-11 | 0 | c97 | 3 | 2:11 | 98.0 | Ex. |
| 1-12 | 0 | c90 | 10 | 5:39 | 95.0 | Ex. |
| 1-13 | a50 | c50 | 0 | 4:20 | 85.0 | Comp. Ex. |
| 1-14 | a75 | c25 | 0 | 4:33 | 83.0 | Comp. Ex. |
| 1-15 | a25 | c75 | 0 | 4:51 | 81.0 | Comp. Ex. |
| 1-16 | a48.5 | c48.5 | 3 | 2:19 | 105.0 | Ex. |
| 1-17 | a73.5 | c23.5 | 3 | 2:35 | 101.0 | Ex. |
| 1-18 | a23.5 | c73.5 | 3 | 2:06 | 96.0 | Ex. |
| 1-19 | b100 | 0 | 0 | 4:30 | 80.0 | Comp. Ex. |
| 1-20 | 0 | d100 | 0 | 4:50 | 81.0 | Comp. Ex. |
| 1-21 | b97 | 0 | 3 | 3:25 | 92.0 | Ex. |
| 1-22 | 0 | d97 | 3 | 3:20 | 91.0 | Ex. |
| 1-23 | 0 | 0 | 0 | 5:36 | 61.0 | Comp. Ex. |
| 1-24 | a95 | 0 | 5 | 4:06 | 89.0 | Ex. |

In Experiments No. 1-23 and No.1-24, cements in Experiments No. 1-1 and 1-7 were changed from ordinary Portland cements to blast furnace cements type B.

### Example 2

Using materials as shown below, concrete products were produced and evaluated in the same manner as in Example 1 except that the following silica materials were further used in combination with gypsum and glycerin, as shown in Table 2.

Table 2 shows results of Example 2, together with the results of Experiments No. 1-1 to No.1-8.

### (Materials used)

Silica material a: Amorphous silica, SiO₂ content: 92%, Blain specific surface area: 7,000 cm²/g, commercial product
Silica material b: Amorphous silica, SiO₂ content 90%, Blain specific surface area: 5,000 cm²/g, commercial product
Silica material c: Amorphous silica, SiO₂ content 90%, Blain specific surface area: 3,000 cm²/g, commercial product
Silica material d: SiO₂ content 60%, Al₂O₃ content 40%, Blain specific surface area: 7,000 cm²/g, commercial product

**TABLE 2**

| Experiment No. | Cement admixture (part) | | | | Initial setting time (hrs:min) | Compressive strength (N/mm²) | Notes |
|---|---|---|---|---|---|---|---|
| | Anhydrous gypsum | Gypsum dihydrate | Silica materials | Glycerin | | | |
| 1-1 | 0 | 0 | 0 | 0 | 4:12 | 70.0 | Comp. Ex. |
| 1-2 | a100 | 0 | 0 | 0 | 4:35 | 88.0 | Comp. Ex. |
| 1-3 | a99.9 | 0 | 0 | 0.1 | 4:00 | 89.0 | Ex. |
| 1-4 | a99 | 0 | 0 | 1 | 3:33 | 91.0 | Ex. |
| 1-5 | a98 | 0 | 0 | 2 | 3:00 | 94.0 | Ex. |
| 1-6 | a97 | 0 | 0 | 3 | 2:34 | 99.0 | Ex. |
| 1-7 | a95 | 0 | 0 | 5 | 2:11 | 105.0 | Ex. |
| 1-8 | a92 | 0 | 0 | 8 | 2:58 | 94.5 | Ex. |
| 1-9 | a90 | 0 | 0 | 10 | 5:38 | 90.0 | Ex. |
| 2-1 | a50 | 0 | a50 | 0 | 5:17 | 99.0 | Comp. Ex. |
| 2-2 | a49.5 | 0 | a49.5 | 1 | 3:16 | 106.0 | Ex. |
| 2-3 | a49 | 0 | a49 | 2 | 2:55 | 110.0 | Ex. |
| 2-4 | a48.5 | 0 | a48.5 | 3 | 1:52 | 113.0 | Ex. |
| 2-5 | a47.5 | 0 | a47.5 | 5 | 1:12 | 117.0 | Ex. |
| 2-6 | a45 | 0 | a45 | 10 | 4:00 | 109.0 | Ex. |
| 2-7 | a20 | 0 | a80 | 0 | 5:25 | 105.0 | Comp. Ex. |
| 2-8 | a19.5 | 0 | a79.5 | 1 | 3:41 | 112.0 | Ex. |
| 2-9 | a19 | 0 | a79 | 2 | 3:08 | 114.0 | Ex. |
| 2-10 | a18.5 | 0 | a78.5 | 3 | 2:19 | 117.0 | Ex. |
| 2-11 | a17.5 | 0 | a77.5 | 5 | 1:36 | 124.0 | Ex. |
| 2-12 | a15 | 0 | a75 | 10 | 4:00 | 113.0 | Ex. |
| 2-13 | a50 | 0 | a45 | 5 | 1:20 | 118.0 | Ex. |
| 2-14 | a35 | 0 | a60 | 5 | 1:25 | 120.0 | Ex. |
| 2-15 | a5 | 0 | a90 | 5 | 1:46 | 123.0 | Ex. |
| 2-16 | 0 | 0 | a100 | 0 | 5:55 | 108.0 | Comp. Ex. |
| 2-17 | a25 | c25 | a50 | 0 | 4:52 | 93.0 | Comp. Ex. |
| 2-18 | a12.5 | c37.5 | a50 | 0 | 5:11 | 98.0 | Comp. Ex. |
| 2-19 | a37.5 | c12.5 | a50 | 0 | 5:00 | 103.0 | Comp. Ex. |
| 2-20 | a10 | c10 | a80 | 0 | 5:15 | 105.0 | Comp. Ex. |
| 2-21 | a25 | c25 | a45 | 5 | 1:20 | 107.0 | Ex. |
| 2-22 | a12.5 | c37.5 | a45 | 5 | 2:00 | 112.0 | Ex. |
| 2-23 | a37.5 | c12.5 | a45 | 5 | 1:39 | 118.0 | Ex. |
| 2-24 | a8.75 | c8.75 | a77.5 | 5 | 1:34 | 120.0 | Ex. |
| 2-25 | a48.5 | 0 | b48.5 | 3 | 2:22 | 110.0 | Ex. |
| 2-26 | a48.5 | 0 | c48.5 | 3 | 3:55 | 105.0 | Ex. |
| 2-27 | a48.5 | 0 | d48.5 | 3 | 4:00 | 104.0 | Ex. |

### Example 3

Using the high strength cement admixture (Experiment No. 2-4) containing 48.5 parts of gypsum a, 48.5 parts of silica material a and 3 parts of glycerin, concrete products were produced and evaluated in the same manner as in Example 2 except that the blend proportion of the high strength cement admixture was changed as shown in Table 3.

Table 3 shows results of Example 3, together with the results of Experiments No. 1-1 and No. 2-4.

**TABLE 3**

| Experiment No. | High strength cement admixture (kg/m³) | Initial setting time (hrs:min) | Compressive strength (N/mm²) | Notes |
|---|---|---|---|---|
| 1-1 | 0 | 4:12 | 70.0 | Comp. Ex. |
| 3-1 | 15 | 4:40 | 106.0 | Ex. |
| 3-2 | 30 | 3:10 | 111.0 | Ex. |
| 2-4 | 45 | 1:52 | 113.0 | Ex. |
| 3-3 | 60 | 1:35 | 115.0 | Ex. |

### Example 4

Concrete products were produced and evaluated in the same manner as in Example 3 except that the blend amount of the high strength cement admixture used in Experiment No. 3-3 was 60 kg/m³ and a grinder was changed to a ball mill, a centrifugal roller mill or a cone mill in the method of mixing and grinding the mixture of gypsum, glycerin and the silica material. The Blain specific surface area after the grinding was 7,000 cm²/g in each Experiment.

Table 4 shows results of Example 4, together with the results of Experiment No. 3-3.

**TABLE 4**

| Experiment No. | Method of mixing and grinding | Initial setting time (hrs:min) | Compressive strength (N/mm²) | Notes |
|---|---|---|---|---|
| 3-3 | Ball mill | 1:35 | 115.0 | Ex. |
| 4-1 | Centrifugal roller mill | 1:50 | 110.0 | Ex. |
| 4-2 | Cone mill | 1:55 | 109.0 | Ex. |

### INDUSTRIAL APPLICABILITY

The high strength cement admixture of the present invention, which allows a concrete product to have enhanced initial strength and long term strength and which is free from retardation of setting, is applicable as a material to enhance the productivity, and thus is suitably used in the field of e.g. civil engineering.

The entire disclosure of Japanese Patent Application No. 2013-004510 filed on January 15, 2013 including specification, claims and summary is incorporated herein by reference in its entirety.

## Claims

1. A high strength cement admixture **characterized by** comprising a ground mixture of gypsum having a particle size of from 2,500 to 9,000 cm²/g as a Blaine specific surface area, and glycerin, wherein the content of the glycerin is from 0.1 to 10 parts by mass per 100 parts by mass in total of the gypsum and the glycerin.

2. The high strength cement admixture according to Claim 1, wherein the ground mixture further contains a silica material having a particle size of at least 5,000 cm²/g as a Blaine specific surface area and containing at least 60 mass% of SiO₂, and wherein the content of the glycerin is from 0.1 to 10 parts by mass and the content of the silica material is from 45 to 90 parts by mass, per 100 parts by mass in total of the gypsum, the silica material and the glycerin.

3. The high strength cement admixture according to Claim 1 or 2, wherein the gypsum is at least one member selected from the group consisting of gypsum dihydrate, gypsum hemihydrate and anhydrous gypsum.

4. The high strength cement admixture according to Claim 2 or 3, wherein the silica material is at least one member selected from the group consisting of silica fume, silica dust, diatomaceous earth, diatomaceous clay and fly ash.

5. The high strength cement admixture according to any one of Claims 1 to 4, wherein the glycerin is attached at the surface of the above ground mixture obtainable by mixing and grinding.

6. A process for producing a concrete product, **characterized by** blending the high strength cement admixture as defined in any one of Claims 1 to 5, with cement, in an amount of from 2 to 15 parts by mass per 100 parts by mass in total of the cement and the high strength cement admixture.

7. The process for producing a concrete product according to Claim 6, wherein pre-curing and steam-curing are carried out before unmolding the concrete product.

8. The process for producing a concrete product according to Claim 7, wherein the pre-curing is carried out for from 0.5 to 2 hours.

9. The process for producing a concrete product according to Claim 7 or 8, wherein the steam-curing is carried out at a temperature of from 40 to 80°C for from 2 to 8 hours.

10. A concrete product obtained by the production process as defined in any one of Claims 6 to 9.
